# EUROPEAN PATENT APPLICATION

(11) **EP 2 442 381 A1**
(43) Date of publication of application: **18.04.2012**
(21) Application number: 10804080.9
(22) Date of filing: 20.07.2010
(51) Int. Cl.: H01M 2/10, B29C 33/42, B29C 45/14, B29L 31/34

(54) **BATTERY PACK CASE AND METHOD FOR MANUFACTURING SAME, AND BATTERY PACK AND METHOD FOR MANUFACTURING SAME**

(30) Priority: 31.07.2009 JP 2009179018
(71) Applicant: Panasonic Corporation, Kadoma-shi Osaka 571-8501 (JP)
(72) Inventor: Takemura, Takashi, Chuo-ku, Osaka-shi Osaka 540-6207 (JP); Tagawa, Setsuo, Chuo-ku, Osaka-shi Osaka 540-6207 (JP); Ota, Shinji, Chuo-ku, Osaka-shi Osaka 540-6207 (JP)
(74) Representative: Schwabe - Sandmair - Marx
(86) International application number: PCT/JP2010/004654
(87) International publication number: WO 2011/013327

(57) **Abstract**

A thin-wall portion can be formed while securing fire retardancy and restrictions on shapes of a battery pack case can be removed. A battery pack case includes a first case component 21 and a second case component 22 having a region coupled to the first case component 21. A space for housing a battery is formed by coupling the first case component 21 and the second case component 22 with each other. The first case component 21 and the second case component 22 respectively include a first resin portion 25 constituted by a fire-retardant resin film and a second resin portion 26 in which, while retaining a predetermined region of the first resin portion 25, resin is integrally molded at a region of the first resin portion 25 which differs from the predetermined region.

## Description

### Technical Field

The present invention relates to a battery pack case and a method for manufacturing the same, and a battery pack and a method for manufacturing the same.

### Background Art

Conventionally, as disclosed in Patent Documents 1 and 2 listed below, a battery pack case made of a resin-molded article obtained by injection-molding a resin is known. With a battery pack case formed by injection molding, a thickness of around 0.8 mm is required to secure fire retardancy as stipulated in UL (Underwriters Laboratories Inc.) 94. Meanwhile, Patent Document 3 below discloses a battery pack case obtained by fitting a resin sheet material with a thickness of around 0.2 mm into a molding die having a rectangular box-shaped recessed part to be molded and then cooled and solidified. Since this battery pack case has a wall thickness of around 0.2 mm, the case has thinner walls than injection-molded articles.

However, molding by fitting a sheet material into a molding die is problematic in that shapes of a battery pack case are restricted. In other words, when carrying out molding by fitting a sheet material into a molding die, since reshaping of the sheet material is limited to some bending or the like, even a slightly complicated shape is difficult to mold. In addition, since requests for varying wall thickness from one region to another or the like cannot be accommodated, there is a problem in that case shapes are restricted.

Patent Document 1: Japanese Patent Application Laid-open No. 2001-58332
Patent Document 2: Japanese Patent Application Laid-open No. 2003-249771
Patent Document 3: Japanese Patent Application Laid-open No. 2003-197168

### Disclosure of the Invention

The present invention has been made in consideration of the above, and an object thereof is to enable formation of thin-wall portions while securing fire retardancy and to ensure that shapes of a battery pack case are not restricted.

In order to achieve the object described above, the present invention provides a battery pack case including: a first resin portion constituted by a fire-retardant resin film; and a second resin portion in which resin is integrally molded with the first resin portion while retaining a predetermined region of the first resin portion.

The present invention provides a battery pack including: the aforementioned battery pack case; and a battery housed in the battery pack case.

The present invention provides a method of manufacturing a battery pack case including: an placing step of placing a resin film inside a cavity of a molding die so that a gap does not remain between a predetermined region of the resin film and an inner surface of the cavity; and a molding step of molding resin by injecting the resin into the cavity of the molding die and integrally molding the resin with the resin film.

The present invention provides a method of manufacturing a battery pack, wherein the battery pack at least houses a battery in a battery pack case manufactured by the aforementioned method of manufacturing a battery pack case.

According to the present invention, a thin-wall portion can be formed while securing fire retardancy and restrictions on shapes of a battery pack case can be removed.

### Brief Description of the Drawings

[Fig. 1] Fig. 1 is a perspective view showing a battery pack according to an embodiment of the present invention.
[Fig. 2] Fig. 2 is a perspective view showing the battery pack in a state where a second case component has been removed.
[Fig. 3] Fig. 3 is a cross-sectional view of a battery pack case taken along III-III in Fig. 1.
[Fig. 4] Fig. 4 is a diagram showing a state in which printing has been performed on a battery pack case.
[Fig. 5] Fig. 5 is an equivalent diagram of Fig. 3 of a battery pack case according to another embodiment of the present invention.
[Fig. 6] Fig. 6 is an equivalent diagram of Fig. 3 of a battery pack case according to another embodiment of the present invention.
[Fig. 7] Fig. 7 is a cross-sectional view of a battery pack case according to another embodiment of the present invention.

### Description of Embodiments

Hereinafter, an embodiment of the present invention will be described with reference to the drawings.

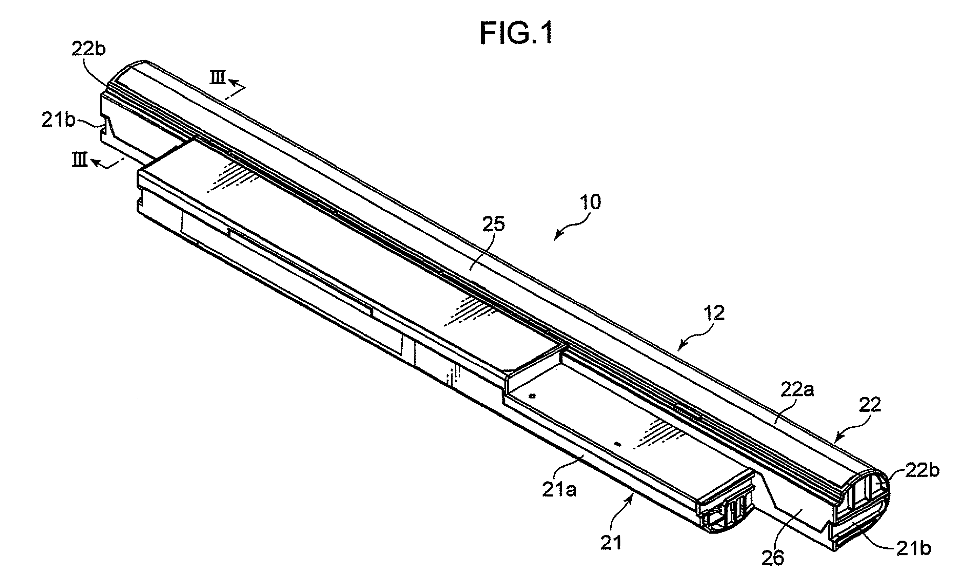

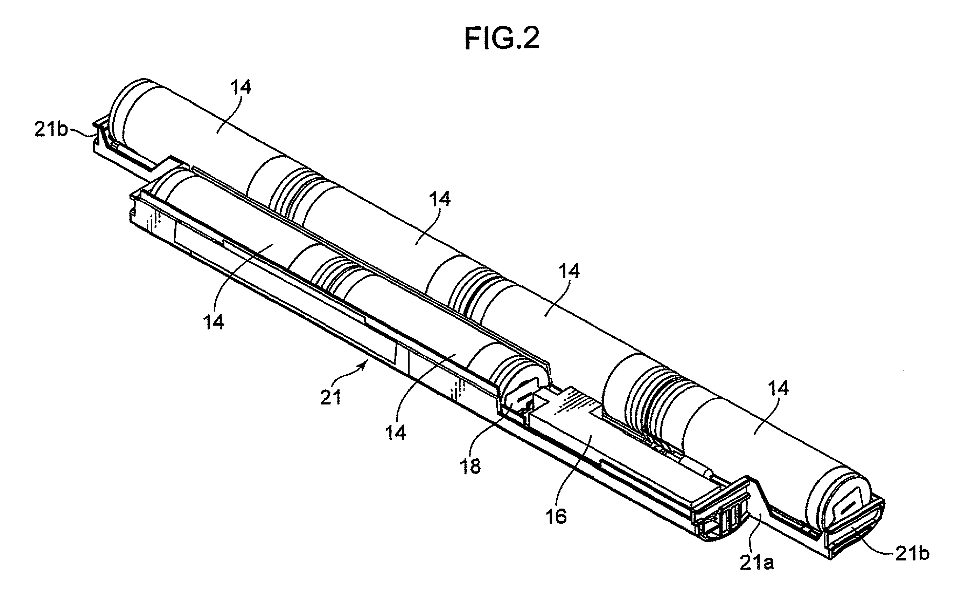

As shown in Figs. 1 and 2, a battery pack according to the present embodiment includes an external case 12 that is a battery pack case and a battery 14 housed in the case 12. The battery 14 is constituted by a cylindrical secondary battery. In the present embodiment, a mode is shown in which a plurality of (in the illustrated example, six) batteries 14 is housed arranged in two rows. A circuit board 16 having a protection circuit of the battery 14 and the like is also housed in the case 12. A connecting terminal (not shown) for external connection is attached to the circuit board 16. The connecting terminal is configured to be exposed to the outside through an opening (not shown) provided on the case 12.

Overall, the case 12 has an external appearance that is elongated in one direction, and the case 12 includes a first case component 21 and a second case component 22 which are coupled with each other to form a housing space of the battery 14. A metallic connecting member 18 or the like for electrically connecting the battery 14 and the circuit board 16 is arranged in the first case component 21, and the battery 14 and the circuit board 16 can be placed on the first case component 21. Meanwhile, the second case component 22 is coupled to the first case component 21 so as to cover the battery 14 and the circuit board 16 placed on the first case component 21.

The first case component 21 integrally includes a curved circumferential surface portion 21a large enough to cover approximately one third to approximately one half of a circumferential surface of the battery 14 and end surface portions 21b provided on both longitudinal ends of the circumferential surface portion 21a. The circumferential surface portion 21 a has an inner surface that conforms to an outer circumferential surface of the battery 14. Specifically, since the present embodiment is configured such that a single vertical row of four batteries 14 and a single vertical row of two batteries 14 are arranged side by side, the inner surface of the circumferential surface portion 21a has a shape in which two recessed surfaces are joined in a width direction at a central part in a longitudinal direction.

The second case component 22 integrally includes a curved circumferential surface portion 22a large enough to cover approximately two thirds to approximately one half of the battery 14 in a circumferential direction and end surface portions 22b provided on both longitudinal ends of the circumferential surface portion 22a. The circumferential surface portion 22a has an inner surface that conforms to the outer circumferential surface of the battery 14. Specifically, the inner surface of the circumferential surface portion 22a has a shape in which two recessed surfaces are joined in a width direction at a central part in a longitudinal direction. Moreover, although an outer surface of one row is formed in a curved shape and an outer surface of the other row is formed in a flat shape in the second case component 22, the second case component 22 is not limited to this configuration.

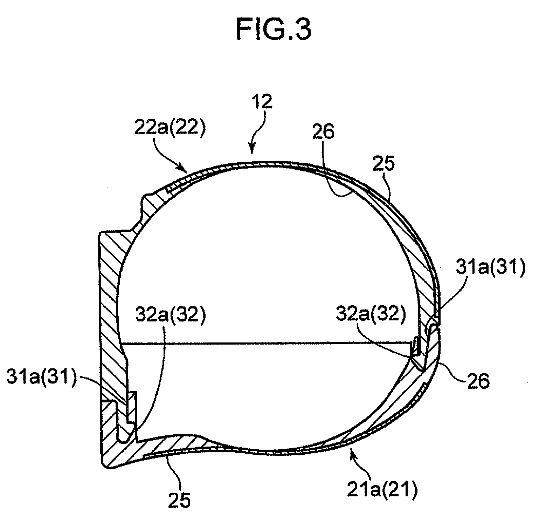

As shown in Fig. 3, the case 12 includes a thin sheet-like first resin portion 25 and a second resin portion 26 that is integrally molded with the first resin portion 25. The first resin portion 25 is respectively provided at the first case component 21 and the second case component 22. In addition, the second resin portion 26 is also respectively provided at the first case component 21 and the second case component 22. The first resin portion 25 is a region molded by bending a resin film as will be described later, and the second resin portion 26 is an injection-molded region as will be described later. Moreover, while the present embodiment is configured such that the first resin portion 25 is only provided at the circumferential surface portions 21a and 22a of the first case component 21 and the second case component 22, a configuration may be adopted in which the first resin portion 25 is also provided at the end surface portions 21 b and 22b.

The first resin portion 25 is respectively provided on the first case component 21 and the second case component 22 at a part in a circumferential direction, and the first resin portion 25 is arranged so as to constitute a part of an outer surface of the case 12. In other words, on the first case component 21 and the second case component 22, the first resin portion 25 is arranged on an outer circumferential part of the case 12. In addition, the second resin portion 26 constitutes an outer surface of the case 12 in regions where the first resin portion 25 is not arranged, and is arranged on an inner side of the first resin portion 25 and integrated with the first resin portion 25 in a region where the first resin portion 25 is arranged. By molding the second resin portion 26 so as to supplement the shape of the first resin portion 25 in this manner, the case 12 can be molded into a shape corresponding to an external shape of the battery 14.

In the region in which the first resin portion 25 is arranged, the second resin portion 26 is coupled to the first resin portion 25 in a state where a part of an inner surface of the first resin portion 25 is retained to an extent that the part is exposed. Therefore, a region solely constituted by the first resin portion 25, a region which differs from the region entirely constituted by the first resin portion 25 and in which the first resin portion 25 and the second resin portion 26 are laminated so that the second resin portion 26 is on an inner side, and a region solely constituted by the second resin portion 26 exist on the circumferential surface portions 21a and 22a of the case 12.

On the first case component 21 and the second case component 22, the first resin portion 25 is respectively constituted by the same fire-retardant resin material. In the present embodiment, a polycarbonate resin is used.

On the first case component 21 and the second case component 22, the second resin portion 26 is respectively constituted by the same fire-retardant resin material, and in the present embodiment, a polycarbonate resin is used. In other words, the first resin portion 25 and the second resin portion 26 are constituted by the same material.

Moreover, instead of a polycarbonate resin, the first resin portion 25 and the second resin portion 26 may be constituted by a polyamide resin, a resin such as an ABS resin, or a fire-retardant resin containing a copolymer or an alloy of such resins.

The first resin portion 25 is an article molded by bending a rolled film with a thickness of around 0.25 mm into a predetermined shape. Since the film is rolled, a packing density of the film is higher than that of an injection-molded film. Therefore, even if a region solely constituted by a polycarbonate film with a thickness of 0.25 mm is present at a part of the case 12, a criterion of fire retardancy stipulated in UL 94 can be satisfied. In addition, a thickness of 0.75 mm is secured for a region solely constituted by the second resin portion 26 in a thickness direction. By adopting such a configuration, the case 12 as a whole satisfies the criterion of fire retardancy stipulated in UL 94. Moreover, there are parts of the region in which the first resin portion 25 and the second resin portion 26 are laminated where the thickness is equal to or less than 0.75 mm.

While the first resin portion 25 can be provided over any range on the first case component 21 and the second case component 22, the first resin portion 25 should be provided over a range including a region where a thinner wall of the case 12 is desired in association with a shape and size of a space for placing the battery pack 10 in a device mounted with the battery pack 10. Consequently, by integrally forming the second resin portion 26 with the first resin portion 25 while retaining a region where a thinner wall is required, a case 12 with a predetermined shape can be obtained while thinning a predetermined region.

In the present embodiment, the coupling between the first case component 21 and the second case component 22 is a mechanical engagement between the second resin portions 26. Specifically, the second resin portion 26 of the first case component 21 has a first coupling portion 31 and the second resin portion 26 of the second case component 22 has a second coupling portion 32.

In the first case component 21, both ends of the second resin portion 26 in a width direction have standing shapes and the standing portions function as the first coupling portion 31. The first coupling portion 31 has through holes 31 a respectively at both ends in a width direction. The through holes 31a are arranged at appropriate positions in a longitudinal direction of the case.

In the second case component 22, both ends of the second resin portion 26 in a width direction are shaped extending downward and the downward portions function as the second coupling portion 32. The second coupling portion 32 has a claw portion 32a which is locked by the first coupling portion 31 in a state where the claw portion 32a is inserted into the through hole 31a of the first coupling portion 31.

Moreover, a configuration may be adopted in which the first coupling portion 31 has a claw portion and the second coupling portion 32 has a through hole. A concave portion may be provided instead of the through hole. At the junction of the first coupling portion 31 and the second coupling portion 32, adhesion by an adhesive or fixing by ultrasonic wave, heat, or the like may be provided in addition to or in place of claw fitting.

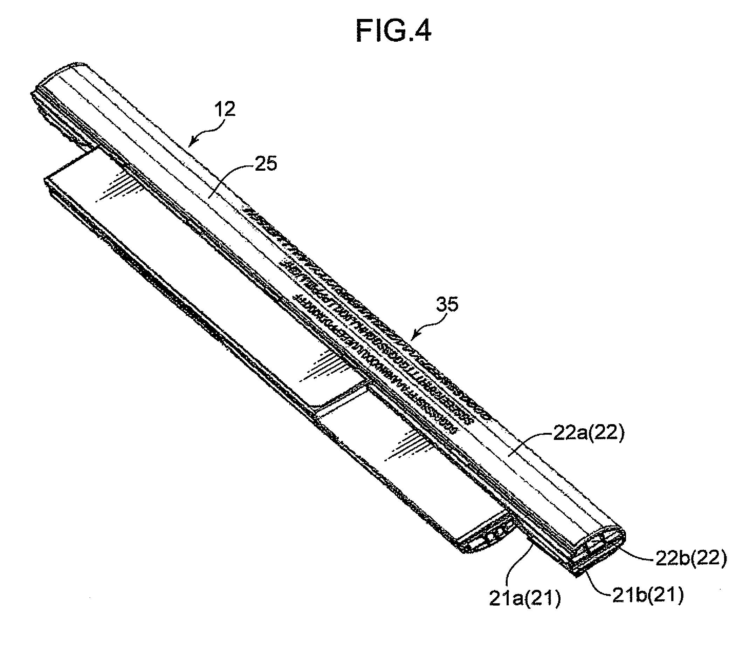

The first resin portion 25 may be constituted by a transparent resin film. In this case, a configuration may be adopted in which necessary information or graphic is printed on a rear surface (inner surface) of the first resin portion 25 and is viewable from the outside (refer to Fig. 4). In this case, a mode where a print 35 is applied to a rear surface of the first resin portion 25 can be realized by setting a film into a molding die so that a surface with the applied print 35 faces inward. Accordingly, abrasion of the print 35 can be prevented while enabling the print 35 to be viewed from the outside.

In order to create a battery pack 10 configured as described above, first, a resin film is formed into a predetermined shape (forming step). In this step, a resin film is set in a molding die (not shown) having a molding surface that conforms to the shape of the first resin portion 25 of the first case component 21, a resin film is set in a molding die having a molding surface that conforms to the shape of the first resin portion 25 of the second case component 22, and heat is applied in this state to solidify the resin films into a predetermined shape.

Next, the resin film (sheet-like resin-molded article) is taken out from the molding dies. In addition, when applying a predetermined print to the resin film, printing is performed on a rear surface-side of the resin film.

Next, a resin film is placed in a first molding die (not shown) for molding the first case component 21 and a resin film is placed in a second molding die (not shown) for molding the second case component 22 (placing step). In this step, a first molding die having a cavity conforming to the shape of the first case component 21 and a second molding die having a cavity conforming to the shape of the second case component 22 are used. With the first molding die, while a resin film is placed at a position where the first resin portion 25 is to be formed, one of the surfaces (outer surface) of the resin film is overlaid on a cavity inner surface of a molding die (for example, a lower die). By closing the molding dies in this state, a molded space is formed between, for example, a cavity inner surface of an upper die (first die) and the cavity inner surface of a lower die (second die). At this point, the cavity inner surface of the upper die comes into contact with a part of the other surface (inner surface) of the resin film and a predetermined region on the inner surface of the resin film is covered by the upper die. In other words, a gap is not formed between the predetermined region of the inner surface of the resin film and the cavity inner surface of the upper die.

Subsequently, in this state, resin is injected into the cavity to integrally mold the resin with the resin film (molding step). Consequently, a resin molded article is produced in which, without a predetermined region on the inner surface of the first resin portion 25 being covered by the second resin portion, the second resin portion 26 is integrally molded with another region on the inner surface of the first resin portion 25. After the injected resin hardens, the resin molded article is taken out from the molding die. The first case component 21 is molded in this manner. In addition, molding of the second case component 22 using the second molding die is performed in a similar manner.

Subsequently, the circuit board 16 and the connecting member 18 are fixed to the first case component 21 and the battery 14 is arranged, and by coupling the second case component 22 to the first case component 21 so as to hold the circuit board 16, the connecting member 18, and the battery 14 therebetween, the battery pack 10 is completed.

As described above, in the battery pack 10 according to the present embodiment, a thickness of a predetermined region of the case 12 is a thickness of the first resin portion 25. In other words, in a case where a wall thickness of the case 12 is restricted due to a restriction imposed on a dimension of the battery pack 10, a region where the thickness of the case 12 is restricted is constituted by the first resin portion 25. In this configuration, the thickness of the region in which the thickness is restricted becomes the thickness of the resin film. However, even with this thickness, since the first resin portion 25 is constituted by a fire-retardant film, a fire-retardant structure required as the battery pack case 12 can be achieved. In addition, by securing a predetermined thickness of the second resin portion 26, a fire-retardant structure as the battery pack case 12 can be achieved. Furthermore, since a configuration is adopted in which resin of the second resin portion 26 is integrally molded with the first resin portion 25, a region with a shape that cannot be accommodated by the film of the first resin portion 25 can now be accommodated by the shape of the second resin portion 26. Therefore, due to the first resin portion 25, a thin-wall region can be formed while retaining fire retardancy and a restriction on dimensions as the battery pack case 12 can be addressed. Moreover, by arranging the shape of the second resin portion 26, cases 12 of various shapes can be realized.

Furthermore, in the present embodiment, since the first resin portion 25 and the second resin portion 26 are constituted by the same material, a coupling force of the first resin portion 25 and the second resin portion 26 can be increased and strength as the battery pack case 12 can be improved. Moreover, since the first resin portion 25 and the second resin portion 26 are both constituted by polycarbonate resin, a thin-wall portion with a thickness of around 0.25 mm can be formed while securing fire retardancy.

In addition, in the present embodiment, since a configuration is adopted in which coupling portions 31 and 32 are respectively provided on the second resin portion 26 and the coupling portions 31 is mechanically engaged with the coupling portion 32, a mechanical engaging structure can be provided using a thick-wall portion of the second resin portion 26. Therefore, an increase in regions for the sake of a engaging structure can be prevented while providing a thin-wall region.

The present invention is not limited to the embodiment described above and various changes and modifications may be made without departing from the spirit and scope of the invention. For example, a configuration may be adopted in which the resin film is provided on one of the first case component 21 and the second case component 22. In other words, in a case where the case 12 allows leeway in terms of wall thickness, a configuration may be adopted in which the first resin portion 25 is only formed on one of the first case component 21 and the second case component 22, and the other of the first case component 21 and the second case component 22 is solely constituted by the second resin portion 26.

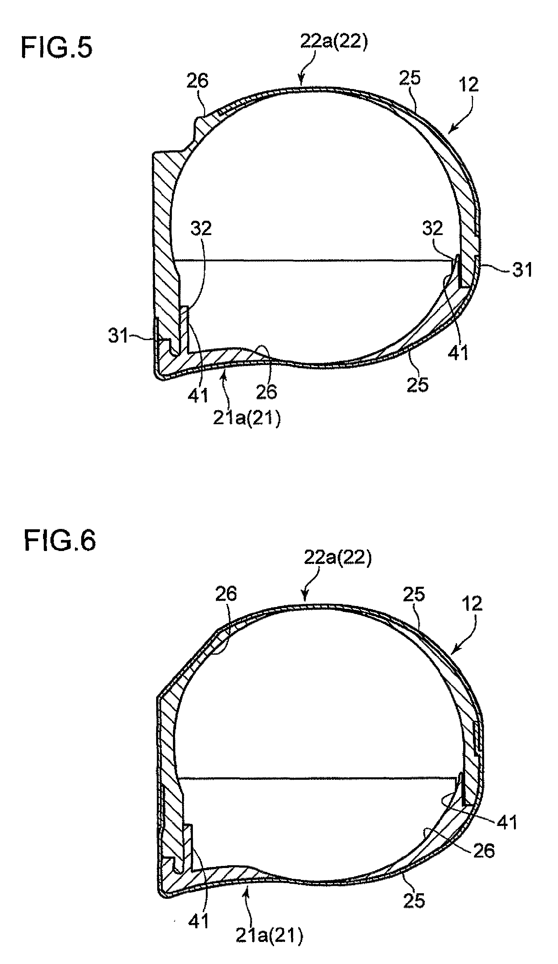

A configuration may be adopted in which the coupling between the first case component 21 and the second case component 22 is a coupling between the first resin portion 25 and the second resin portion 26. For example, as shown in Fig. 5, with the first case component 21, ends of the first resin portion 25 are respectively positioned at both ends of the first case component 21 in a width direction. The ends of the first resin portion 25 protrude more upward than the second resin portion 26. The protruding portions function as the first coupling portion 31. In addition, holding portions 41 which hold the second case component 22 in a state where the second resin portion 26 of the second case component 22 is sandwiched between the holding portions 41 and the first coupling portion 31 are respectively formed at both ends of the second resin portion 26 in a width direction. With the second case component 22, the ends thereof in the width direction are constituted solely by the second resin portion 26. In addition, these portions are formed in a shape that can be inserted between the holding portions 41 and the first coupling portion 31. These portions function as the second coupling portions 32 that are coupled to the first coupling portion 31. Coupling between the first coupling portion 31 and the second coupling portion 32 may be realized by press-fitting the second coupling portion 32, bonding the first resin portion 25 and the second resin portion 26 with each other using an adhesive, or fixing by ultrasonic wave or heat. As a result, a coupling structure can be prevented from taking a complicated shape and moldability can be improved.

A configuration may be adopted in which the coupling between the first case component 21 and the second case component 22 is a coupling between the first resin portion 25 and the first resin portion 25. For example, a case 12 shown in Fig. 6 has a region in which the first resin portion 25 of the first case component 21 and the first resin portion 25 of the second case component 22 overlap each other. In the region in which the first resin portions 25 and 25 overlap each other, the two resin portions 25 and 25 may either be bonded by an adhesive or fixed by ultrasonic wave or heat. As a result, a coupling structure can be prevented from taking a complicated shape and moldability can be improved. In this case, the second resin portion 26 of the first case component 21 and the second resin portion 26 of the second case component 22 may be fixed by pressure fitting or the like.

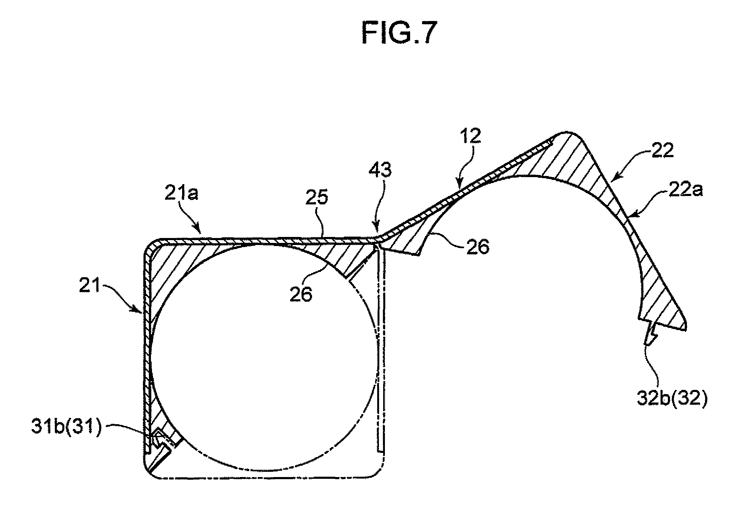

While the embodiment described above adopts a configuration in which the first case component 21 and the second case component 22 are separately molded and then coupled with each other, such a configuration is not restrictive. For example, as shown in Fig. 7, the first case component 21 and the second case component 22 may be molded in a state where the first and second case components 21 and 22 are coupled via a hinge 43. In this case, a molding die (not shown) for integrally molding the first case component 21 and the second case component 22 is used.

Fig. 7 shows a cross section of a case 12 having a rectangular box-shaped exterior appearance in a closed state, and a cylindrical battery 14 is arranged inside the case 12. The case 12 is configured such that the second resin portion 26 of the first case component 21 and the second resin portion 26 of the second case component 22 are bisected by a division surface (coupling surface) along a diagonal direction. In addition, at one vertex position of the rectangle, a hinge 43 is constituted by the first resin portion 25 provided on a region from the first case component 21 to the second case component 22, and at a position of a vertex at a diagonal position, the first coupling portion 31 and the second coupling portion 32 for coupling the first case component 21 and the second case component 22 are formed. The first coupling portion 31 includes the concave portion 31b and the second coupling portion 32 includes a claw portion 32a that engages with the concave portion 31 b. Moreover, a configuration may be adopted in which the first coupling portion 31 has a claw portion and the second coupling portion 32 has a concave portion.

The first resin portion 25 is provided so as to be continuous with outer circumferential portions on three sides among four sides of a rectangle. In other words, one end of the first resin portion 25 is positioned in a vicinity of a diagonal position of the hinge 43 on the first case component 21, and another end is positioned approximately at a center portion of the second case component 22 in a width direction. Regions solely constituted by the first resin portion 25 respectively exist on the three sides where the first resin portion 25 exists, and the first case component 21 and the second case component 22 have a thickness of around 0.25 mm at these regions. The remaining one side where the first resin portion 25 does not exist is solely constituted by the second resin portion 26 and a thickness of the second case component on this one side is around 0.75 mm at minimum.

In order to create the case 12 configured in this manner, first, a resin film is formed into a predetermined shape and, subsequently, the resin film is placed inside a cavity of a molding die and resin is injection-molded. Since this molding die has a cavity having a shape in which the first case component 21 and the second case component 22 are connected, the first and second case components 21 and 22 can be collectively molded.

Moreover, while Fig. 7 shows a configuration in which the first resin portion 25 is arranged on three faces of a rectangle, such a configuration is not restrictive. For example, a configuration may be adopted in which the first resin portion 25 is respectively arranged on four faces of a rectangle. In this case, a thin-wall portion solely constituted by the first resin portion 25 can be respectively provided on the four faces, In addition, a configuration may be adopted in which the first resin portion 25 is provided only on one of the case components 21 and 22. In this case, the hinge 43 may be constituted by the second resin portion 26. Furthermore, configurations are not limited to those having a cross-sectional shape providing a rectangular external appearance. There may be a region where an external surface is formed bent to conforms to the shape of the battery 14.

Moreover, the specific embodiment described above primarily includes an invention configured as follows.

In order to achieve the object described above, the present invention provides a battery pack case including: a first resin portion constituted by a fire-retardant resin film; and a second resin portion in which resin is integrally molded with the first resin portion while retaining a predetermined region of the first resin portion.

In the present invention, the thickness of a predetermined region of the case is the thickness of the first resin portion. In other words, when a wall thickness of the case is restricted due to a restriction imposed on dimensions of the battery pack, a region in which the thickness of the case is restricted is constituted by the first resin portion. In this configuration, the thickness of the region in which the thickness is restricted becomes the thickness of the resin film. However, even with this thickness, since the first resin portion is constituted by a fire-retardant film, a fire-retardant structure required as a battery pack case can be achieved. In addition, by securing a predetermined thickness for the second resin portion, a fire-retardant structure as a battery pack case can be achieved. Furthermore, since a configuration is adopted in which resin of the second resin portion is integrally molded with the first resin portion, a region with a shape that cannot be accommodated by the film of the first resin portion can now be accommodated by the shape of the second resin portion. Therefore, due to the first resin portion, a thin-wall region can be formed while retaining fire retardancy and a restriction on dimensions as a battery pack case can be addressed. Moreover, by arranging the shape of the second resin portion, battery pack cases of various shapes can be realized.

In this case, favorably, the resin constituting the second resin portion is the same material as the resin film of the first resin portion. Furthermore, in the embodiment, since the first resin portion and the second resin portion are constituted by the same material, a coupling force of the first resin portion and the second resin portion can be increased and strength as a battery pack case can be improved.

In addition, the second resin portion and the first resin portion may both be constituted by a polycarbonate resin. In this embodiment, a thin-wall portion with a thickness of around 0.25 mm can be formed while securing fire retardancy.

When the resin film is transparent, printing may be provided on a rear surface of the resin film. In this embodiment, abrasion of the print can be prevented while enabling the print to be viewed from the outside.

When a configuration includes a first case component and a second case component having a region coupled to the first case component, and a space for housing a battery is formed by coupling the first case component and the second case component with each other, the first resin portion may be provided on at least one of the first case component and the second case component.

In this embodiment, the second resin portion may be respectively provided on the first case component and the second case component, the second resin portion of the first case component may have a first coupling portion, and the second resin portion of the second case component may have a second coupling portion to be mechanically engaged to the first coupling portion. In this embodiment, since a mechanical engaging structure can be provided using a thick-wall portion of the second resin portion, an increase in regions for the sake of the engaging structure can be prevented while providing a thin-wall region.

In addition, when the first resin portion and the second resin portion are respectively provided on the first case component and the second case component, the first resin portion of the first case component and the second resin portion of the second case component may be coupled with each other. In this embodiment, fixing by an adhesive or heating may be adopted as the coupling between the first resin portion and the second resin portion, and a coupling structure can be prevented from taking a complicated shape. Therefore, moldability can be improved.

In addition, when the first resin portion is respectively provided on the first case component and the second case component, the first resin portion of the first case component and the first resin portion of the second case component may be coupled with each other. In this embodiment, fixing by an adhesive, ultrasonic wave or heating may be adopted as the coupling between the first resin portions, and a coupling structure can be prevented from taking a complicated shape. Therefore, moldability can be improved.

Furthermore, when the first resin portion is provided on a region from the first case component to the second case component, the first resin portion that connects the first case component and the second case component to each other may function as a hinge. In this embodiment, since the first resin portion formed by a thin-wall resin film can be caused to function as a hinge, a battery pack case can be obtained in which the first case component and the second case component are integrally molded.

The present invention provides a battery pack including: the aforementioned battery pack case; and a battery housed in the battery pack case.

The present invention provides a method of manufacturing a battery pack case including: an placing step of placing a resin film inside a cavity of a molding die so that a gap does not remain between a predetermined region of the resin film and an inner surface of the cavity; and a molding step of molding resin by injecting the resin into the cavity of the molding die and integrally molding the resin with the resin film.

This manufacturing method may include a forming step of forming a resin film into a predetermined shape, wherein in the placing step, a resin film formed into a predetermined shape in the forming step may be placed into the molding die.

The present invention provides a method of manufacturing a battery pack, wherein the battery pack at least houses a battery in a battery pack case manufactured by the aforementioned method of manufacturing a battery pack case.

### Industrial Applicability

As described above, according to the present invention, a thin-wall portion can be formed while securing fire retardancy and restrictions on shapes of a battery pack case can be removed.

### Explanation of Reference Numerals

- 14: battery
- 21: first case component
- 21a: circumferential surface portion
- 21b: end surface portion
- 22: second case component
- 22a: circumferential surface portion
- 22b: end surface portion
- 25: first resin portion
- 26: second resin portion
- 31: first coupling portion
- 32: second coupling portion
- 35: print
- 43: hinge

## Claims

1. A battery pack case comprising:
a first resin portion constituted by a fire-retardant resin film; and
a second resin portion in which resin is integrally molded with the first resin portion while retaining a predetermined region of the first resin portion.

2. The battery pack case according to claim 1, wherein the resin constituting the second resin portion is the same material as the resin film of the first resin portion.

3. The battery pack case according to claim 2, wherein the second resin portion and the first resin portion are both constituted by a polycarbonate resin.

4. The battery pack case according to any one of claims 1 to 3, wherein
the resin film is transparent, and
printing is provided on a rear surface of the resin film.

5. The battery pack case according to any one of claims 1 to 4, further comprising:
a first case component; and
a second case component having a region that is coupled to the first case component, wherein
a space for housing a battery is formed by coupling the first case component and the second case component with each other, and
the first resin portion is provided on at least one of the first case component and the second case component.

6. The battery pack case according to claim 5, wherein
the second resin portion is respectively provided on the first case component and the second case component,
the second resin portion of the first case component has a first coupling portion, and
the second resin portion of the second case component has a second coupling portion to be mechanically engaged to the first coupling portion.

7. The battery pack case according to claim 5, wherein
the first resin portion and the second resin portion are respectively provided on the first case component and the second case component, and
the first resin portion of the first case component and the second resin portion of the second case component are coupled with each other.

8. The battery pack case according to claim 5, wherein
the first resin portion is respectively provided on the first case component and the second case component, and
the first resin portion of the first case component and the first resin portion of the second case component are coupled with each other.

9. The battery pack case according to any one of claims 5 to 8, wherein
the first resin portion is provided on a region from the first case component to the second case component, and
the first resin portion that connects the first case component and the second case component to each other functions as a hinge.

10. A battery pack comprising:
the battery pack case according to any one of claims 1 to 9, and
a battery housed in the battery pack case.

11. A method of manufacturing a battery pack case,
the method comprising:
an placing step of placing a resin film inside a cavity of a molding die so that a gap does not remain between a predetermined region of the resin film and an inner surface of the cavity; and
a molding step of molding resin by injecting the resin into the cavity of the molding die and integrally molding the resin with the resin film.

12. The method of manufacturing a battery pack case according to claim 11, further comprising a forming step of forming the resin film into a predetermined shape, wherein
in the placing step, the resin film formed into a predetermined shape in the forming step is placed into the molding die.

13. A method of manufacturing a battery pack, wherein
the battery pack at least houses a battery in a battery pack case manufactured by the method of manufacturing a battery pack case according to claim 11 or 12.
